# EUROPEAN PATENT APPLICATION

(11) **EP 2 752 774 A1**
(43) Date of publication of application: **09.07.2014**
(21) Application number: 13157589.6
(22) Date of filing: 04.03.2013
(51) Int. Cl.: G06F 13/38

(54) **Electronic apparatus and data processing method thereof**

(30) Priority: 04.01.2013 TW 102100292
(71) Applicant: Acer Incorporated, New Taipei City 221 (TW)
(72) Inventor: Jiang, Shu-Yu, 221 New Taipei City (TW)
(74) Representative: Becker Kurig Straus

(57) **Abstract**

An electronic apparatus and a data processing method thereof are provided. The electronic apparatus includes a processing unit, a first and a second bus interface. The first bus interface transmits and receives a first type data related to a target device. The second bus interface transmits and receives a second type data related to the target device. When the processing unit receives a first data string to be transmitted, the processing unit determines a data type of at least one first data included in the first data string, and determines to transmit the at least one first data through the first or the second bus interface according to the data type of the at least one first data.

## Description

### BACKGROUND

### Field of the Invention

The present invention is directed to an electronic apparatus and a data processing method thereof and more particularly, to an electronic apparatus and a data processing method thereof capable of exchanging data with other devices through a plurality of bus interfaces.

### Description of Related Art

In modem life, various electronic products have become indispensable in people's life. Among them, a computer device has become one of the most common electronic products used by people due to its convenience and diversified ways of operation. Generally, in the computer device, a motherboard is disposed and used for carrying important elements, such as a CPU or a memory. Moreover, the motherboard has interfaces for expansion devices (e.g. a display card and network card) such that users may upgrade the operating performance of the computer device by adding new expansion devices.

However, the motherboard typically performs data exchange with each of the expansion devices through a single type of bus interface (e.g. a peripheral component interconnect express (PCIe) interface or a secure digital I/O (SDIO) interface).

### SUMMARY

Accordingly, the present invention is directed to an electronic apparatus and a data processing method thereof, which allows the electronic apparatus to exchange data with other device through at least two bus interfaces.

The present invention is directed to an electronic apparatus including a first bus interface, a second bus interface and a processing unit. The first bus interface transmits and receives first type data related to a target device. The second bus interface transmits and receives second type data related to target device. The processing unit is coupled to the first bus interface and the second bus interface. When receiving a first data string to be transmitted, the processing unit determines a data type of at least one first data contained in the first data string and determines to transmit each of the at least one first data through the first bus interface or the second bus interface according to the data type of the at least one first data.

The present invention is directed to a data processing method adapted to an electronic apparatus. The method includes the following steps. Firstly, a data string to be transmitted is received, wherein the data string contains at least one data. Then, a data type of each of the at least one data in the data string belonging to first type data or second type data is determined. Thereafter, each of the data is determined to be transmitted through a first bus interface or a second bus interface according to the data type of each of the data.

The present invention is directed to a data processing method adapted to an electronic apparatus. The method includes the following steps. Firstly, at least one first data is received from a target device through a first bus interface and a second bus interface. Then, each of the at least one first data is merged to generate a first data string.

To sum up, by the electronic apparatus and the data processing method thereof provided by the present invention, the electronic apparatus may perform data exchange about the first type data and the second type data with the target device through both of the first bus interface and the second bus interface simultaneously.

### BRIEF DESCRIPTION OF THE DRAWINGS

The accompanying drawings are included to provide a further understanding of the present invention, and are incorporated in and constitute a part of this specification. The drawings illustrate embodiments of the present invention and, together with the description, serve to explain the principles of the present invention.

FIG. 1 is a schematic diagram illustrating data exchange between an electronic apparatus and a target device according to an embodiment of the present invention.

FIG. 2A is a schematic diagram of transmitting a data string from the electronic apparatus to the target device according to an embodiment of the present invention.

FIG. 2B is the flowchart of a data processing method according to the embodiment illustrated in FIG. 2A.

FIG. 2C is a flowchart of the data processing method according to the embodiment illustrated in FIG. 2B.

FIG. 2D is a flowchart of the data processing method according to the embodiment illustrated in FIG. 2B.

FIG. 3A is a schematic diagram of the electronic apparatus receiving the data string from the target device according to an embodiment of the present invention.

FIG. 3B is a flowchart of the data processing method according to the embodiment illustrated in FIG. 3A.

FIG. 3C is a flowchart of the data processing method according to the embodiment illustrated in FIG. 3B.

FIG. 3D is a flowchart of the data processing method according to the embodiment illustrated in FIG. 3B.

FIG. 4 is a schematic diagram illustrating data exchange between the electronic apparatus and the target device according to an embodiment of the present invention.

### DESCRIPTION OF EMBODIMENTS

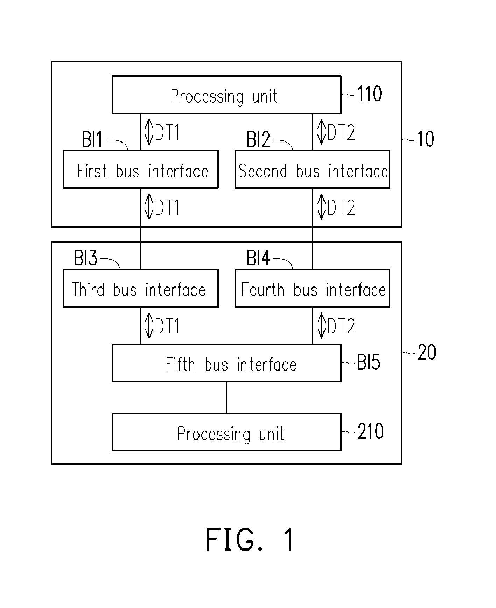

FIG. 1 is a schematic diagram illustrating data exchange between an electronic apparatus and a target device according to an embodiment of the present invention. In the present embodiment, an electronic apparatus 10 includes a first bus interface BI1, a second bus interface BI2 and a processing unit 110. The electronic apparatus 10 is a motherboard of devices such as a personal computer (PC), a notebook computer (NB) or the like, but the present invention is not limited thereto. The first bus interface BI1 is configured to transmit and receive first type data DT1 related to a target device 20. The second bus interface BI2 is configured to transmit and receive second type data DT2 related to the target device 20. The processing unit 110 is coupled to the first bus interface BI1 and the second bus interface BI2 and configured to process the first type data DT1 and the second type data DT2. The first bus interface BI1 is, for example, a Secure Digital I/O (SDIO) connection interface, and the second bus interface 220 is, for example, a peripheral component interconnect express (PCIe) connection interface, but the implementation of the present invention is not limited thereto.

The target device 20 is a device connected with the electronic apparatus 10 and is capable of exchanging data with the electronic apparatus 10 (e.g., a motherboard), such as a display card, a network card, an audio card, etc. The target device 20 may include a third bus interface BI3, a fourth bus interface BI4, a fifth bus interface BI5, and a processing unit 210. The third bus interface BI3 may be connected with the first bus interface BI1 through a corresponding hardware interface (e.g., a SDIO interface) and configured to exchange data belonging to the first type data DT1 between the electronic apparatus 10 and the target device 20. The fourth bus interface BI4 may be connected with the second bus interface BI2 through a corresponding hardware interface (e.g., a PCIe interface) and configured to exchange data belonging to the second type data DT2 between the electronic apparatus 10 and the target device 20. The fifth bus interface BI5 is coupled to the third bus interface BI3, the fourth bus interface BI4 and the processing unit 210. The fifth bus interface BI5 is ,for example, a bus of the advanced microcontroller bus architecture (AMBA) and configured for performing data transmission between the processing unit 210 and the third bus interface BI3 or between the processing unit 210 and the fourth bus interface BI4. The processing unit 210 is, for example, a microprocessor or the like.

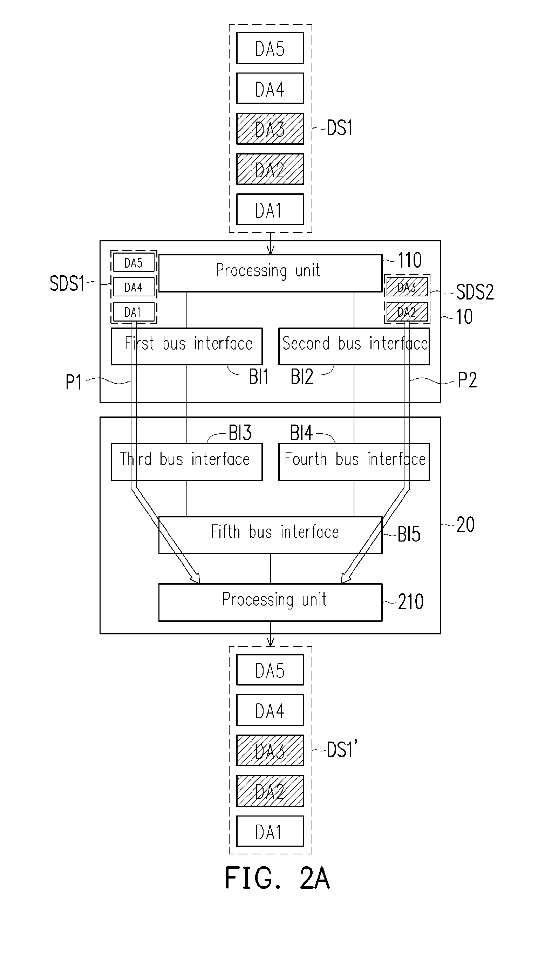

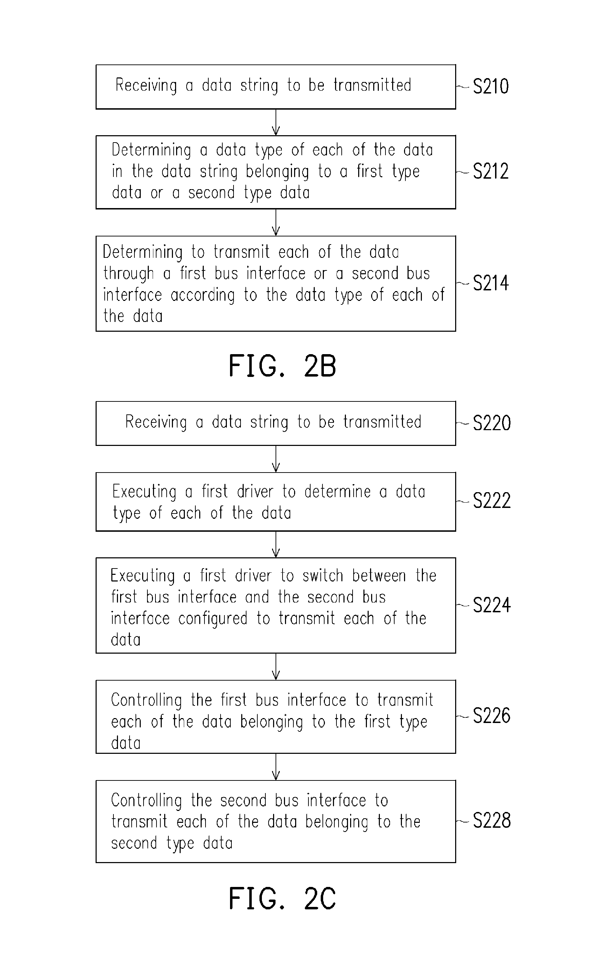

FIG. 2A is a schematic diagram of transmitting a data string from the electronic apparatus to the target device according to an embodiment of the present invention. FIG. 2B is a flowchart of the data processing method according to the embodiment illustrated in FIG. 2A. Referring to FIG. 2B, the method proposed in the present embodiment may be executed by the electronic apparatus 10 depicted in FIG. 2A. Hereinafter, detailed steps of the data processing method will be described with reference to each elements depicted in FIG. 2A. In step S210, the processing unit 110 may receive a data string DS1 to be transmitted, and the data string DS1 contains data DA1∼DA5. In the data string DS1, it is assumed that the data DA1, DA4 and DA5 belong to the first type data DT1, and the data DA2∼DA3 belong to the second type data DT2.

In the case where the target device 20 is a network card, the data DA1∼DA5 may be packets associated with a network communication protocol (e.g. the transmission control protocol/Internet protocol (TCP/IP) or the like), but the present invention is not limited thereto.

In step S212, the processing unit 110 may determine a data type of each of the data DA1∼DA5 in the data string DS1 belonging to the first type data DT1 or second type data DT2. Then, in step S214, the processing unit 110 may determine to transmit the data DA1∼DA5 through the first bus interface BI1 or the second bus interface BI2 according to the data type of the data DA1∼DA5. In detail, taking the data DA1 as an example, when the processing unit 110 receives the data DA1, the processing unit 110 determines that the data type of the data DA1 belongs to the first type data DT1. Thus, the processing unit 110 may transmit the data DA1 to the first bus interface BI1. After receiving the data DA1, the first bus interface BI1 forwards the data DA1 to the processing unit 210 sequentially through the third bus interface BI3 and the fifth bus interface BI5.

Then, when receiving the data DA2, the processing unit 110 determines that the data type of the data DA2 belongs to the second type data DT2. Thereafter, the processing unit 110 transmits the data DA2 to the second bus interface BI2. When receiving the data DA2, the second bus interface BI2 forwards the data DA2 to the processing unit 210 sequentially through the fourth bus interface BI4 and the fifth bus interface BI5. People with ordinary skills in the art may understand how the processing unit 110 processes the data DA3∼DA5 from the above teachings and thus will not be repeated hereinafter.

From another point of view, the processing unit 110 may split the data string DS1 into sub data strings SDS1 and SDS2. The sub data string SDS1 includes the data DA1, DA4 and DA5 belonging to the first data type DT1. The sub data string SDS2 includes the data DA2 and DA3 belonging to the second data type DT2. Afterwards, the processing unit 110 may transmit the sub data strings SDS1 and SDS2 to the processing unit 210 of the target device 20 respectively through transmission paths P1 and P2. The transmission path P1 includes the first bus interface BI1, the third bus interface BI3 and the fifth bus interface BI5, sequentially. The transmission path P2 includes the second bus interface BI2, the fourth bus interface BI4 and the fifth bus interface BI5, sequentially.

After the sub data strings SDS1 and SDS2 are received by the processing unit 210 in the target device 20, the processing unit 210 may control the fifth bus interface BI5 (e.g. an AMBA bus) to merge the sub data strings SDS1 and SDS2 to generate a data string DS1' by, for example, executing a specific firmware. Then, the processing unit 210 may perform subsequent processing to the data string DS1' according to the operating feature of the target device 20. For instance, when the target device 20 is a network card, the processing unit 210 may transmit the data string DS1' to other communication devices (e.g. a network access point) through a communication unit (not shown) of the target device 20 so as to perform corresponding communication functions.

It should be noted that after the processing unit 110 decides the bus interface for transmitting the data DA1∼DA5, the processing unit 110 may record a data sequence of receiving the data DA1∼DA5 in a specific manner, such as recording an order of the received timing of the data). Thus, the processing unit 210 may merge the data DA1∼DA5 according to the data sequence thereof, such that the data sequence in the data strings DS1' and the DS1 may conform to each other.

In brief, when the electronic apparatus 10 is about to transmit data to the target device 20, the processing unit 110 may determine the bus interface used for transmitting the data according to the data type of the data. From another point of view, the electronic apparatus 10 may adaptively switch between the bus interfaces to transmit the data, such that the data to be transmitted may be transmitted to the target device 20 through the corresponding bus interface. In other words, the electronic apparatus 10 may perform data exchange with the target device 20 through two different types of bus interfaces.

Additionally, in other embodiments, the processing unit 110 may further adjusts the bus interface used for communicating with the target device 20 according to an operational condition of a power supply module (not shown) in the electronic apparatus 10. For example, when the power supply module is operating in a high-performance mode, the electronic apparatus 10 may switch the bus interface used for communicating with the target device 20 to be the bus interface (e.g., a PCIe interface) with higher efficiency (e.g., higher transmission speed). As such, the electronic apparatus 10 may perform data exchange with the target device 20 in a faster and higher data transmission manner. For another example, when the power supply module is operating in a low performance mode, the electronic apparatus 10 may switch the bus interface used for communicating with the target device 20 to be the bus interface (i.e. a SDIO interface) with lower power consumption. As such, the electronic apparatus 10 may perform data exchange with the target device 20 in a lower power-consuming manner to save power. However, the present invention is not limited to the above implementation.

FIG. 2C is a flowchart of a data processing method according to the embodiment illustrated in FIG. 2B. The method proposed in the present embodiment may also be executed by the electronic apparatus 10 depicted in FIG. 2A. Hereinafter, detailed steps of the data processing method will be described with reference to each elements depicted in FIG. 2A. Therein, the details of step S220 may be referred to the related description of the step S210 illustrated in FIG. 2B, which would not be repeated herein.

In step S222, the processing unit 110 may execute a first driver to determine a data type of the data DA1∼DA5. The first driver may be, for example, a miniport driver configured to control both the first bus interface BI1 and the second bus interface BI2 after a developer adjusts its programming code, but the present invention is not limited thereto. Then, in step S224, the processing unit 110 may execute the first driver (e.g., a miniport driver) to switch between the first bus interface BI1 and the second bus interface BI2 configured for transmitting each of the data. In step S226, the processing unit 110 may control the first bus interface BI1 to transmit each of the data belonging to the first type data DT1 (e.g., the data DA1, DA4 and DA5). In step S228, the processing unit 110 may control the second bus interface BI2 to transmit each of the data belonging to the second type data DT2 (e.g., the data DA2 and DA3). In other embodiments, steps S226 and S228 may be performed reversely or simultaneously, which may be adjusted by the developer of the electronic apparatus 10 according to development requirements.

In brief, in the present embodiment, the processing unit 110 may manage the transmission mechanism related to the first bus interface and the second bus interface merely through the first driver (e.g. a miniport driver).

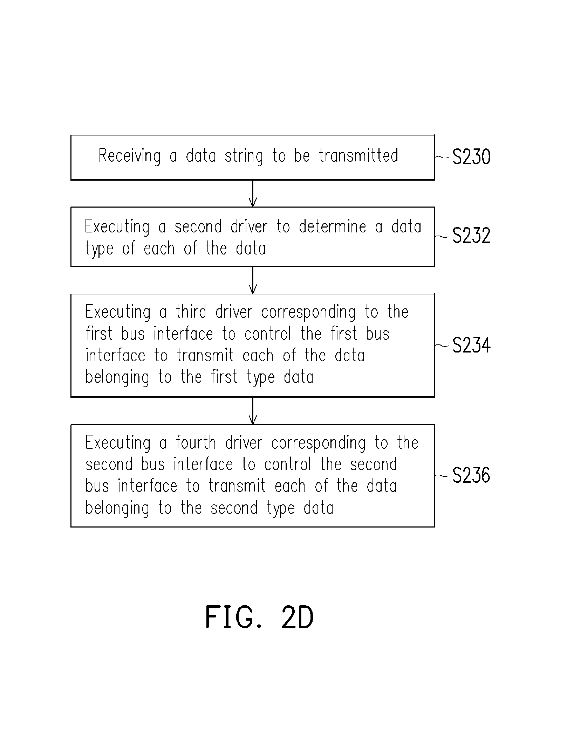

FIG. 2D is a flowchart of the data processing method according to the embodiment illustrated in FIG. 2B. The method proposed in the present embodiment may also be executed by the electronic apparatus 10 depicted in FIG. 2A. Hereinafter, detailed steps of the data processing method will be described with reference to each elements depicted in FIG. 2A. Therein, the details of step S230 may be referred to the related description of the step S210 illustrated in FIG. 2B, which would not be repeated herein.

In step S232, the processing unit 110 may execute a second driver to determine a data type of the data DA1∼DA5. The second driver may be, for example, an intermediate driver. Then, in step S234, the processing unit 110 may execute a third driver corresponding to the first bus interface BI1 to control the first bus interface BI1 to transmit each of the data belonging to the first type data DT1 (e.g., the data DA1, DA4 and DA5). The third driver may be, for example, a miniport driver corresponding to the first bus interface BI1, which may be executed by the processing unit 110 to control the transmission mechanism related to the first bus interface BI1. Then, in step S236, the processing unit 110 executes a fourth driver corresponding to the second bus interface BI2 to control the second bus interface BI2 to transmit each of the data belonging to the second type data DT2 (e.g., the data DA2 and DA3). The fourth driver may be, for example, a miniport driver corresponding to the second bus interface BI2, which may be executed by the processing unit 110 to control the transmission mechanism related to the second bus interface BI2. In other embodiments, steps S234 and S236 may be performed reversely or simultaneously, which may be adjusted by the developer of the electronic apparatus 10 according to development requirements.

The difference between the embodiments illustrated in FIG. 2D and FIG. 2C is set forth as follows. In the embodiment illustrated in FIG. 2C, the processing unit 110 controls the transmission mechanism related to the first bus interface BI1 and the second bus interface BI2 merely through the first driver (e.g., a miniport driver). As such, since both the first bus interface BI1 and the second bus interface BI2 are managed by the first driver (e.g. a miniport driver), the processing unit 110 may achieve higher efficiency when processing the data to be transmitted.

However, in the embodiment illustrated in FIG. 2D, the first bus interface BI1 and the second bus interface BI2 respectively have their corresponding drivers, i.e., the third and the fourth drivers. Meanwhile, the processing unit 110 further integrates the transmission mechanisms related to the first bus interface BI1 and the second bus interface BI2 through the second driver, e.g., an intermediate driver. As such, when the developer wants to add any other new bus interface (not shown) on the electronic apparatus 10, the developer of the electronic apparatus 10 merely has to modify the second driver (e.g., the intermediate driver) configured for integrating the third and the fourth drivers. Thus, the developer may achieve better convenience when increasing or decreasing the bus interfaces.

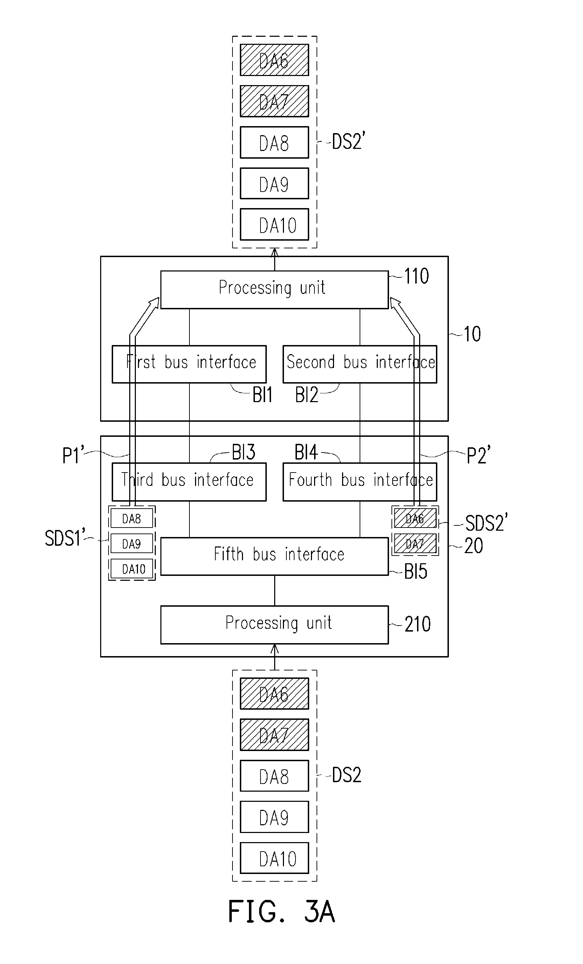

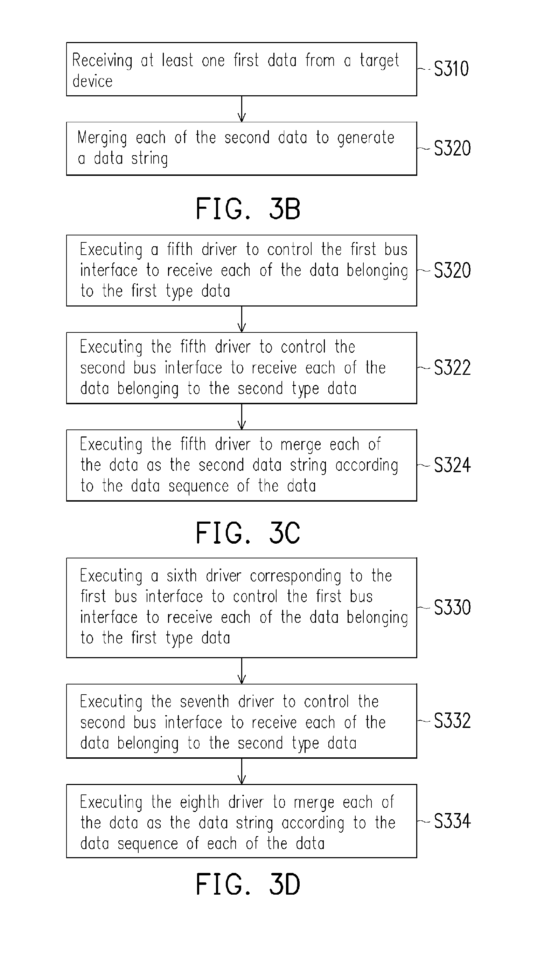

FIG. 3A is a schematic diagram of the electronic apparatus receiving the data string from the target device according to an embodiment of the present invention. FIG. 3B is a flowchart of the data processing method according to the embodiment illustrated in FIG. 3A. Referring to FIG. 3B, the data processing method proposed in the present embodiment may be executed by the electronic apparatus 10 depicted in FIG. 3A, and detailed steps thereof will be described with reference to each elements depicted in FIG. 2A.

After receiving a data string DS2 (i.e., data DA6∼DA10), the processing unit 210 respectively may determine a data type of each of the data DA6∼DA10. Meanwhile, the processing unit 210 may execute a specific firmware to control a fifth bus interface BI5 (e.g., an AMBA bus) to split the data string DS2 so as to generate sub data strings SDS1' (including data DA8∼DA10) and SDS2' (including data DA6∼DA7). Therein, the data DA6∼DA7 may belong to the second type data DT2 and the DA8∼DA10 may belong to the first type data DT1. In an embodiment, the target device 20 is, for example, a network card and thus, the data DA6∼DA10 may be the data sequentially received by a communication unit (not shown) in the target device 20 from network access points. Then, the sub data strings SDS1' and SDS2' may be transmitted to the electronic apparatus 10 through transmission paths P1' and P2', respectively. The transmission path P1' sequentially includes the third bus interface BI3 and the first bus interface BI1, and the transmission path P2' sequentially includes the fourth bus interface BI4 and the second bus interface BI2.

Afterward, in step S310, the processing unit 110 of the electronic apparatus 10 may receive the data DA6∼DA10 from the target device 20. After receiving the data DA6∼DA10, in step S312, the processing unit 110 may merge the data DA6∼DA10 to generate a data string DS2'.

In an embodiment, when splitting the data string DS2, the processing unit 210 of the target device 20 may record a data sequence in a specific manner for receiving the data DA6∼DA10. Thus, after transmitting the data DA6∼DA10 to the electronic apparatus 10, the processing unit 110 may merge the data DA6∼DA10 according to the data sequence thereof, such that the data sequence in the data strings DS2' and DS2 may conform to each other.

In brief, when the electronic apparatus 10 receives the data DA6∼DA10 from the target device 20, the processing unit 110 may receive the data with the data type corresponding to the first bus interface BI1 and the third bus interface BI3 respectively from the first bus interface BI1 and the third bus interface BI3. Meanwhile, the processing unit 110 may further merge the data DA6∼DA10, such that the data sequence in the data string DS2' may be identical to the data sequence in the data string DS1'. In other words, the electronic apparatus 10 performs data exchange with the target device 20 through two different types of bus interfaces.

FIG. 3C is a flowchart of the data processing method according to the embodiment illustrated in FIG. 3B. The data processing method proposed in the present embodiment may be executed by the electronic apparatus 10 depicted in FIG. 3A, and detailed steps thereof will be described with reference to each elements depicted in FIG. 3A. In step S320, the processing unit 110 may execute a fifth driver to control the first bus interface BI1 to receive each of the data belonging to the first type data DT1 (i.e., the data DA8∼DA10). In step S322, the processing unit 110 may execute the fifth driver to control the second bus interface BI2 to receive each of the data belonging to the second type data DT2 (i.e., the data DA6 and DA7). The fifth driver may be, for example, a miniport driver configured to control both the first bus interface BI1 and the second bus interface BI2 after a developer adjusts its programming code.

Then, in step S324, the processing unit 110 may execute the fifth driver (e.g., a miniport driver) to merge each of the data (e.g., the data DA6∼DA10) as the data string DS2' according to the data sequence thereof. In an embodiment, the data sequence may be, for example, information attached to the data DA6∼DA10 when the processing unit 210 of the target device 20 splits the data string DS2, such that the processing unit 110 of the electronic apparatus 10 may recover the data string DS2' accordingly.

Briefly, in the present embodiment, the processing unit 110 may manage the transmission mechanism of the first bus interface BI1 and the second bus interface BI2 merely through executing the fifth driver (e.g., a miniport driver).

FIG. 3D is a flowchart of the data processing method according to the embodiment illustrated in FIG. 3B. The data processing method set forth in the present embodiment may be executed by the electronic apparatus 10 depicted in FIG. 3A, and detailed steps thereof will be described with reference to each elements depicted in FIG. 3A. Firstly, in step S330, the processing unit 110 may execute a sixth driver corresponding to the first bus interface BI1 to control the first bus interface BI1 to receive each of the data belonging to the first type data DT1 (i.e., the data DA8∼DA10). The sixth driver may be, for example, a miniport driver corresponding to the first bus interface BI1, which may be executed by the processing unit 110 to control the transmission mechanism related to the first bus interface BI1. Then, in step S332, the processing unit 110 may execute a seventh driver corresponding to the second bus interface BI2 to control the second bus interface BI2 to receive each of the data (i.e., the data DA6 and DA7) belonging to the second type data DT2. The seventh driver may be, for example, a miniport driver corresponding to the second bus interface BI2, which may be may be executed by the processing unit 110 to control the transmission mechanism related to the second bus interface BI2. In other embodiments, steps S330 and S332 may be performed reversely or simultaneously, which may be adjusted by the developer of the electronic apparatus 10 according to development requirements.

The difference between the embodiments illustrated in FIG. 3D and FIG. 3C is set forth as follows. In the embodiment illustrated in FIG. 3C, the processing unit 110 controls the transmission mechanism related to the first bus interface BI1 and the second bus interface BI2 merely through the first driver (e.g., a miniport driver). As such, since both the first bus interface BI1 and the second bus interface BI2 are managed by the fifth driver (e.g., a miniport driver), the processing unit 110 may achieve higher efficiency when processing the received data (e.g., the data DA6∼DA10).

However, in the embodiment illustrated in FIG. 3D, the first bus interface BI1 and the second bus interface BI2 respectively have the corresponding drivers, i.e., the sixth and the seventh drivers. Meanwhile, the processing unit 110 further integrates the transmission mechanisms related to the first bus interface BI1 and the second bus interface BI2 through an eighth driver (e.g., an intermediate driver). As such, when the developer wants to add any other new bus interface (not shown) on the electronic apparatus 10, the developer of the electronic apparatus 10 merely has to modify the eighth driver configured for integrating the sixth and the seventh drivers (e.g., miniport drivers). Thus, the developer may achieve better convenience when increasing or decreasing the bus interfaces.

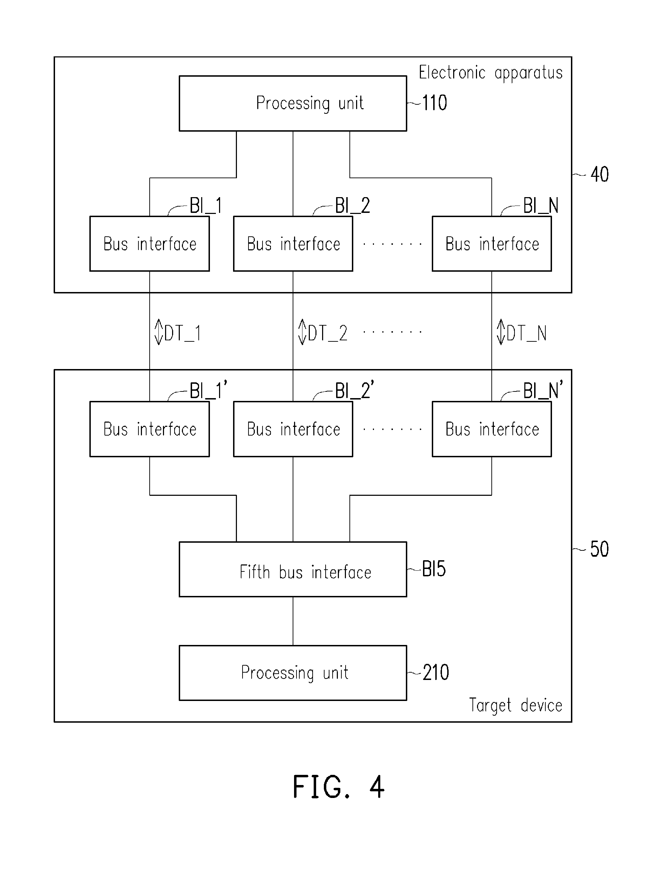

FIG. 4 is a schematic diagram illustrating data exchange between the electronic apparatus and the target device according to an embodiment of the present invention. In the present embodiment, an electronic apparatus 40 may exchange data DT_1∼DT_N belonging to various data types of data with a target device 50 through a plurality of bus interfaces BI_1∼BI_N, wherein N is a positive integer.

In an embodiment, the processing unit 110 of the electronic apparatus 40 may manage transmission mechanisms related to all of the bus interfaces BI_I∼BI_N through executing a single driver (e.g., a miniport driver). The operating mechanisms related to data exchange in the present embodiment may refer to the related descriptionof the embodiments illustrated in FIG. 2C (where the data is transmitted from the electronic apparatus to the target device) or FIG. 3C (where the data from the target device is received by the electronic apparatus) and will not be repeated hereinafter.

Alternatively, in other embodiment, the processing unit 110 may manage transmission mechanisms related to all of the bus interfaces BI_1∼BI_N through executing the drivers (e.g., miniport drivers) corresponding to each of the bus interfaces BI_1∼BI_N. Then, the processing unit 110 may further execute a driver (e.g., an intermediate driver) configured for integrating each of the bus interfaces BI_1∼BI_N so as to perform an operation of merging data received from each of the bus interfaces BI_1∼BI_N. The related operating mechanism of data exchange may refer to the embodiment illustrated in FIG. 2D (where the data is transmitted from the electronic apparatus to the target device) or the embodiment illustrated in FIG. 3D (where the data from the target device is received by the electronic apparatus) and will not be repeated hereinafter.

Based on the above, in the electronic apparatus and the data processing method thereof of the present invention, the electronic apparatus may perform data exchange with the target device through at least two types of bus interfaces. For instance, when transmitting data to the target device, the electronic apparatus may adaptively switch between the bus interfaces for transmitting the data according to the data type of the data to be transmitted. Thus, the data may be transmitted to the target device through the bus interface having the corresponding hardware interface. In the meantime, when receiving data from the target device through a plurality of bus interfaces, the electronic apparatus may further merge the data to recover the data as in the original data sequence in the target device. Additionally, with the driver adaptively developed for each of the bus interfaces, a situation of data loss in the electronic apparatus may be prevented when switching between the bus interfaces.

## Claims

1. An electronic apparatus (10, 40), comprising:
a first bus interface (BI1), transmitting and receiving first type data (DT1) related to a target device (20);
a second bus interface (BI2), transmitting and receiving second type data (DT2) related to the target device (20); and
a processing unit (110), coupled to the first bus interface (BI1) and the second bus interface (BI2),
wherein when receiving a first data string (DS1) to be transmitted, the processing unit (110) determines a data type of at least one first data (DA1-DA5) comprised in the first data string (DS1) and determines to transmit each of the at least one first data (DA1-DA5) through the first bus interface (BI1) or the second bus interface (BI2) according to the data type of the at least one first data (DA1-DA5).

2. The electronic apparatus according to claim 1, wherein when receiving at least one second data (DA6-DA10) from the target device (20), the processing unit (110) merges each of the at least one second data (DA6-DA10) to generate a second data string (DS2).

3. The electronic apparatus according to claim 2, wherein the processing unit (110) executes a first driver to switch between the first bus interface (BI1) and the second bus interface (BI2) to transmit each of the data, controls the first bus interface (BI1) to transmit each of the data belonging to the first type data (DT1) and controls the second bus interface (BI2) to transmit each of the data belonging to the second type data (DT2).

4. The electronic apparatus according to claim 3, wherein the processing unit (110) executes a second driver corresponding to the first bus interface (BI1) to control the first bus interface (BI1) to transmit each of the data belonging to the first type data (DT1) and executes a third driver corresponding to the second bus interface (BI2) to control the second bus interface (BI2) to transmit each of the data belonging to the second type data (DT2).

5. The electronic apparatus according to claim 2, wherein the processing unit (110) executes a first driver to control the first bus interface (BI1) to receive each of the at least one second data (DA6-DA10) belonging to the first type data (DT1) and executes the first driver to control the second bus interface (BI2) to receive each of the at least one second data (DA6-DA10) belonging to the second type data (DT2).

6. The electronic apparatus according to claim 5, wherein the processing unit (110) executes the first driver to merge each of the at least one second data (DA6-DA10) to generate the second data string (DS2) according to a data sequence of each of the at least one second data (DA6-DA10).

7. A data processing method, adapted to an electronic apparatus (10, 40), comprising:
receiving a data string (DS1) to be transmitted, wherein the data string (DS1) comprises at least one data (DA1-DA5);
determining a data type of each of the at least one data (DA1-DA5) in the data string (DS1) belonging to first type data (DT1) or second type data (DT2); and
determining to transmit each of the data (DA1-DA5) through a first bus interface (BI1) or a second bus interface (BI2) according to the data type of each of the data (DA1-DA5).

8. The method according to claim 7, wherein the step of determining to transmit each of the data (DA1-DA5) through the first bus interface (BI1) or the a second bus interface (BI2) according to the data type of each of the data (DA1-DA5) comprises:
executing a first driver to switch between the first bus interface (BI1) and the a second bus interface (BI2) configured to transmit each of the data (DA1-DA5);
controlling the first bus interface (BI1) to transmit each of the data (DA1-DA5) belonging to the first type data (DT1); and
controlling the a second bus interface (BI2) to transmit each of the data (DA1-DA5) belonging to the second type data (DT2).

9. The method according to claim 8, wherein the step of determining to transmit each of the data (DA1-DA5) through the first bus interface (BI1) or the a second bus interface (BI2) according to the data type of each of the data (DA1-DA5) comprises:
executing a second driver corresponding to the first bus interface (BI1) to control the first bus interface (BI1) to transmit each of the data belonging to the first type data (DT1); and
executing a third driver corresponding to the a second bus interface (BI2) to control the a second bus interface (BI2) to transmit each of the data belonging to the second type data (DT2).

10. A data processing method, adapted to an electronic apparatus (10, 40), comprising:
receiving at least one first data (DA6-DA10) from a target device (20) through a first bus interface (BI1) and a second bus interface (BI2) ;
merging each of the at least one first data (DA6-DA10) to generate a first data string (DS2).

11. The method according to claim 10, wherein the step of receiving the at least one first data (DA6-DA10) from the target device (20) through the first bus interface (BI1) and the a second bus interface (BI2) comprises:
executing a first driver to control the first bus interface (BI1) to receive each of the at least one first data belonging to first type data (DT1); and
executing the first driver to control the a second bus interface (BI2) to receive each of the at least one first data belonging to second type data (DT2).

12. The method according to claim 11, wherein the step of merging each of the at least one first data (DA6-DA10) to generate the first data string (DS2) comprises:
executing the first driver to merge each of the at least one first data (DA6-DA10) as the first data string (DS2) according to a data sequence of each of the at least one first data (DA6-DA10).

13. The method according to claim 10, wherein the step of receiving the at least one first data (DA6-DA10) from the target device (20) through the first bus interface (BI1) and the a second bus interface (BI2) comprises:
executing a first driver corresponding to the first bus interface (BI1) to control the first bus interface (BI1) to receive each of the at least one first data belonging to first type data (DT1); and
executing a second driver corresponding to the a second bus interface (BI2) to control the second bus interface (BI2) to receive each of the at least one first data belonging to the second type data (DT2).
